# FASCICULE DE BREVET EUROPEEN

(11) **EP 3 007 805 B1**
(45) Date de publication et mention de la délivrance du brevet: **12.07.2017**
(21) Numéro de dépôt: 14733274.6
(22) Date de dépôt: 05.06.2014
(51) Int. Cl.: B01D 53/32, B01D 53/78, B01J 19/08

(54) **PROCEDE DE TRAITEMENT D'AU MOINS UN FLUX D'EFFLUENTS GAZEUX**
VERFAHREN ZUR BEHANDLUNG MINDESTENS EINER GASFÖRMIGEN AUSSTRÖMUNG
METHOD FOR TREATING AT LEAST ONE GASEOUS EFFLUENT STREAM

(30) Priorité: 10.06.2013 FR 1301321
(43) Date de publication de la demande: 20.04.2016
(73) Titulaire: Vivirad (Société Anonyme), 67117 Handschuheim (FR)
(72) Inventeur: LETOURNEL, Eric, F-67117 Ittenheim (FR)
(74) Mandataire: Nuss, Laurent
(86) Numéro de dépôt international: PCT/FR2014/051352
(87) Numéro de publication internationale: WO 2014/199053

(56) Documents cités:
- EP-A1- 2 246 117
- WO-A1-96/24805
- DE-A1- 3 616 800
- US-A- 4 752 450

## Description

La présente invention concerne un dispositif de traitement d'au moins un flux gazeux, plus particulièrement un flux d'effluents gazeux pollués en vue de sa dépollution.

On sait que de nombreux effluents gazeux sont pollués. Afin de les dépolluer, il existe des solutions de l'art antérieur qui consistent à traiter ces effluents dans une ligne comprenant plusieurs réacteurs ayant chacun une fonction.

Un traitement connu consiste à soumettre le flux gazeux à un bombardement d'électrons à haute énergie, dans un des réacteurs de la ligne.

Si les gaz sont associés à des réactifs adaptés, le bombardement d'électrons assure une ionisation et une excitation des molécules contenues dans l'effluent gazeux, notamment des molécules polluantes. Les réactifs présents et les radicaux libres engendrés par le bombardement d'électrons vont réagir avec les composés polluants de l'effluent gazeux pour donner des produits non polluants d'une part sous forme de précipités et des produits gazeux débarrassés des produits polluants.

On obtient ainsi à partir de gaz contenant des oxydes de soufre et des oxydes d'azote, des sulfates d'ammonium et des nitrates d'ammonium. De tels gaz sont issus de raffineries, de l'industrie du pétrole lourd, des incinérateurs ou des aciéries.

Les lignes de traitement connues comprennent ainsi plusieurs réacteurs pour introduire les réactifs, pour soumettre à un bombardement électronique, pour récupérer les produits.

On peut se reporter à la demande de brevet WO 2010/141306 qui divulgue des agencements de ce type.

Dans ces agencements, il s'agit bien d'une ligne de plusieurs réacteurs. On note aussi que le bombardement est perpendiculaire au sens de circulation du flux gazeux. Or, on sait que les électrons perdent rapidement de l'énergie lors des collisions avec les molécules gazeuses du flux gazeux.

Les électrons ont donc une très forte énergie dans la couche supérieure et une plus faible énergie dans la couche inférieure du flux.

De ce fait le bombardement n'est pas homogène.

La seule solution est de diffuser ces électrons en quantité et en énergie suffisante pour qu'ils traitent la couche inférieure de façon adaptée mais alors il y a une sur puissance inutile en partie haute et une perte d'énergie en fond de réacteur, ce qui a toujours un coût.

Il existe aussi des besoins de même type pour des applications différentes, notamment dans la fabrication de polymères. Au cours de ces procédés, un bombardement d'électrons peut provoquer la génération de radicaux libres et/ou activer les monomères pour les rendre plus réactifs et assurer une polymérisation plus complète, plus rapide ou rendre possibles des greffages en présence de catalyseurs. US 4752450 divulgue un procédé de traitement d'un flux gazeux pollué qui contient du SOx et des NOx. On y ajout de l'ammoniac gazeux et on soumet le flux gazeux à un faisceau d'électrons. Le but de la présente invention est de permettre un traitement efficace de gaz dans un réacteur unique en les soumettant à un bombardement par un faisceau d'électrons.

A cet effet, un procédé de traitement d'au moins un flux gazeux selon la revendication 1 est proposé.

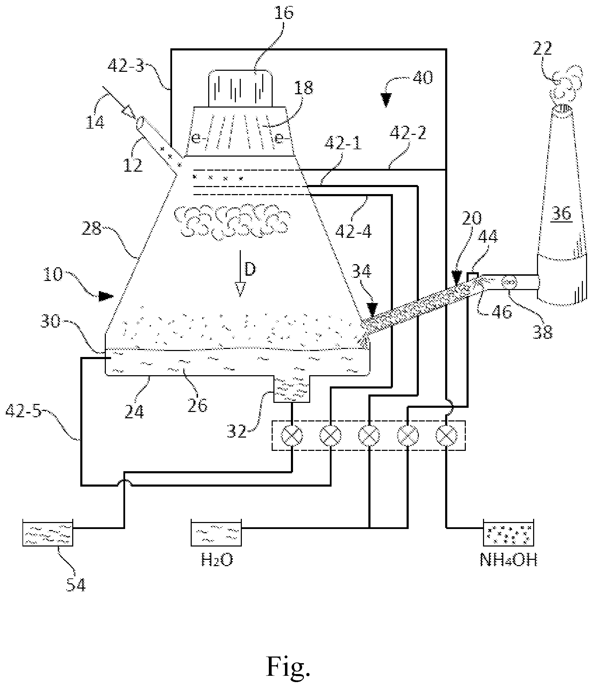

Le dispositif qui peut être utilisé dans le procédé selon l'invention et le procédé sont maintenant décrits en détail suivant un mode de réalisation particulier, en regard du dessin annexé, dessin sur lequel la figure unique représente une vue schématique (avec principalement une coupe selon une vue en élévation latérale) du dispositif permettant la mise en oeuvre du procédé selon la présente invention.

Le dispositif qui est maintenant décrit est relatif à un réacteur adapté plus particulièrement au traitement d'un flux d'effluents gazeux pollués mais trouverait une utilisation pour d'autres applications dans lesquels il est nécessaire d'activer des radicaux libres de composés chimiques gazeux, comme dans la chimie des polymères, en présence de catalyseurs par exemple.

Le dispositif comprend un réacteur 10 unique, des moyens 12 d'entrée d'au moins un flux 14 gazeux dans le réacteur unique, des moyens 16 d'émission d'un faisceau 18 d'électrons dans ledit réacteur et des moyens 20 de sortie du réacteur unique des produits 22 gazeux ayant subi le traitement par le faisceau d'électrons.

Le réacteur unique comporte aussi des moyens 24 de récupération de sous-produits 26 liquides, disposés en partie inférieure dudit réacteur unique.

On note que, dans l'agencement tel que représenté schématiquement sur la figure unique, les moyens 12 d'entrée du au moins un flux gazeux sont disposés en haut du réacteur 10 unique, et en ce que les moyens 20 de sortie des produits gazeux sont disposés en bas dudit réacteur 10 unique.

Le réacteur unique est une enceinte 28 qui est avantageusement de forme tronconique, voire cylindro-conique.

Cette géométrie a l'avantage de générer un gradient de température du haut vers le bas du réacteur afin d'optimiser l'efficacité de traitement des polluants contenus dans l'effluent gazeux. Par exemple, les rendements d'élimination des oxydes d'azote par faisceau d'électrons sont favorisés par des températures d'effluent gazeux élevées (par exemple pour des températures supérieures à 100°C) alors que les meilleurs rendements d'élimination des oxydes de soufre sont obtenus pour des températures plus faibles (par exemple pour des températures inférieures à 60°C).

Dans le mode préférentiel de réalisation, le au moins un flux 14, gazeux est introduit par les moyens 12 d'entrée et la circulation s'effectue vers les moyens 20 de sortie définissant ainsi une direction D de circulation, symbolisée par une flèche. En l'occurrence, cette direction est, encore plus avantageusement, orientée verticalement.

Les moyens 12 d'entrée consiste en au moins un piquage en partie supérieure, latéralement, mais incliné vers le réacteur 10 unique de façon que les éventuels liquides se formant dans ces moyens 12 d'entrée s'écoulent gravitairement dans ledit réacteur 10 unique.

Les moyens 16 d'émission d'un faisceau 18 d'électrons dans ledit réacteur 10 sont disposés en partie haute de ce réacteur. Le faisceau 18 d'électrons émis est orienté de façon particulière et sensible pour la présente invention puisque le faisceau 18 doit être orienté dans le sens de circulation du au moins un flux gazeux, c'est-à-dire suivant la direction D de circulation, ceci avec une tolérance de ± 30°, pour obtenir un haut rendement.

La puissance du faisceau 18 est adaptée suivant la nature du flux gazeux à traiter d'une part et suivant la réactivité des molécules introduites dans le réacteur 10 unique d'autre part.

La géométrie du faisceau 18 d'électrons est adaptée à la géométrie du haut du réacteur de façon à couvrir la section du haut du réacteur, ceci de façon uniforme et homogène.

En partie inférieure, les moyens 24 de récupération de sous-produits 26 liquides sont constitués de la partie inférieure du réacteur 10 unique lui-même, de forme tronconique. De façon avantageuse, le pied 30 du réacteur est ainsi de forme cylindrique, dans le prolongement de la forme conique supérieure.

Le réacteur 10 unique peut aussi comporter un puits 32 de collecte, ménagé dans sa base, de façon à créer un point bas de collecte au sein même du bain liquide formé en pied de réacteur.

Les moyens 20 de sortie des produits gazeux, disposés en bas dudit réacteur 10 unique, comprennent un piquage 34 généralement dirigé soit vers un système de recyclage, soit vers une cheminée 36 avec mise à l'air libre, pour l'application au traitement d'effluents gazeux pollués. Des moyens 38 de circulation, par exemple sous forme de ventilateurs, sont interposés de façon à faire circuler les produits 22 gazeux.

On note que le piquage 34 est orienté vers le haut de façon que les éventuels liquides entraînés par les produits gazeux ou formés par exemple par condensation, s'écoulent par gravité vers l'intérieur du réacteur 10 unique.

Le réacteur 10 unique est aussi équipé de moyens 40 d'introduction de réactifs permettant l'introduction de ces réactifs dans ledit réacteur 10. Ces moyens 40 d'introduction peuvent prendre la forme d'au moins un piquage 42.

Dans le mode de réalisation présenté, appliqué au traitement d'un flux d'effluents gazeux pollués, il est prévu, pour le moins, les piquages suivants :
un piquage 42-1 d'injection d'eau,
un premier piquage 42-2 d'injection d'ammoniaque,
un second piquage 42-3 d'ammoniaque, et
un piquage 42-4 de recyclage des effluents liquides.

Dans le cas des piquages, en fonction des besoins, les piquages peuvent se présenter à l'intérieur du réacteur 10 unique sous forme de couronnes de diffusion à buses par exemple de façon à répartir les fluides et éventuellement à les microniser afin de permettre une plus grande efficacité du bombardement d'électrons comme cela est décrit ci-après.

Le dispositif est complété par des moyens 44 de lavage des produits gazeux.

Ces moyens 44 peuvent être constitués de buses 46 de pulvérisation d'eau, disposées en sortie du flux gazeux.

On peut avantageusement prévoir des « rideaux » de lavage de l'effluent gazeux par pulvérisation/spray de liquide en sortie de réacteur.

De façon avantageuse, il est aussi associé au réacteur 10 unique et plus particulièrement au puits 32 de collecte, des moyens 48 de pompage d'une première fraction des sous-produits 26 liquides, fortement concentrée en sels.

Pour le recyclage de la seconde fraction des sous-produits 26 liquides, à travers le piquage 42-4 dédié à cet effet, il est prévu des moyens 50 de pompage avec un piquage 42-5 de prélèvement situé en partie supérieure du bain de sous-produits 26 en fond de réacteur.

De façon générale, le dispositif comporte un automate 52 de pilotage, symbolisé par le carter incluant des pompes, des capteurs de débit, de pression, de température et des moyens informatiques associés à tous les éléments nécessaires pour piloter et contrôler les réactions au sein du réacteur, les températures de réaction, les temps de séjour des flux gazeux avant et pendant le traitement. Cette instrumentation est connue et n'est pas représentée en détail, car elle est parfaitement à la portée de l'homme de l'art et les composants sont disponibles dans le commerce ou accessibles.

Le dispositif comprend aussi un réservoir 54 de stockage des produits liquides fortement concentrés en sels.

Le procédé de mise en oeuvre du dispositif est maintenant décrit.

Ce procédé consiste en au moins la succession des étapes suivantes :
- introduire au moins un flux 14 gazeux,
- introduire au moins un réactif, notamment de l'ammoniaque NH₄OH dans le cas d'un procédé visant le traitement d'au moins un flux 14 gazeux du type effluents gazeux pollués,
- soumettre le au moins un flux gazeux et le au moins un réactif à un faisceau d'électrons,
- séparer le ou les produit(s) liquides issus du traitement d'un flux gazeux par faisceaux d'électrons et d'autre part les produits gazeux traités,
ceci au sein d'un réacteur 10 unique.

Selon l'exemple détaillé d'application dans la présente invention, le procédé prévoit dans le cas du traitement d'au moins un flux 14 gazeux constitué d'effluents gazeux pollués, un traitement par injection d'eau et d'ammoniaque. L'ammoniac pourrait aussi être injecté sous forme gazeuse.

Ainsi, le flux gazeux 14, si l'on n'en introduit qu'un, passe par les moyens 12 d'introduction. Ces moyens 12 d'introduction sont disposés de façon latérale pour ne pas perturber le faisceau 18 d'électrons émis par les moyens 16 d'émission de ce faisceau, mais en fonction de l'architecture, ces moyens pourraient être dirigés de façon centrale, suivant la direction D de circulation du flux gazeux au sein du réacteur 10 unique.

Le procédé prévoit une émission de ce faisceau 18 d'électrons dans une direction D, qui est celle de la circulation du flux dans le réacteur 10 unique, ceci avec une plage d'incidences entre la direction d'émission du faisceau 18 d'électrons et la direction D de circulation du flux dans le réacteur unique comprise entre ± 30°.

L'objectif est de diriger le faisceau 18 d'électrons sensiblement parallèlement à la direction D de circulation du flux gazeux dans le réacteur 10 unique.

En effet, plus le faisceau 18 est parallèle à la direction D du flux 14 gazeux dans le réacteur 10 et plus l'efficacité dudit faisceau 18 sera importante. Les électrons émis ont une puissance maximale au contact du flux 14 gazeux entrant, ceci de façon homogène.

De plus les électrons poursuivent leur course dans la direction du flux ils ont donc tendance à heurter des molécules du flux 14 gazeux et des réactifs sur toute la hauteur du flux 14 gazeux contenu dans le réacteur 10, avant d'avoir heurté une paroi du réacteur et donc avant d'avoir subi l'amortissement correspondant.

On note aussi que, dans l'agencement représenté, les électrons qui n'auraient pas été absorbés par les molécules gazeuses, viennent agir sur la surface du bain des produits 26 liquides en fond du réacteur 10 unique, poursuivant les éventuelles réactions sur les différentes molécules.

C'est ainsi que, suivant un perfectionnement du procédé selon la présente invention, les produits 26 liquides recueillis sont réinjectés pour une part en tête du flux 14 gazeux à proximité des moyens d'introduction de façon à leur faire subir un nouveau bombardement d'électrons.

Le pH du bain est contrôlé, ainsi que l'ensemble des paramètres de gradient de températures dans le réacteur.

Dans le cas de traitement de fumées, les suies, cendres volantes et autres matières en suspension sont éliminées.

La soumission du mélange d'effluents gazeux SOₓ et NOₓ et de réactifs au faisceau 18 d'électrons, induit la formation de radicaux qui décomposent les composés organiques volatils et les dioxines, et convertissent les oxydes de soufre et d'azote en un mélange de sels de sulfate et de nitrate d'ammonium.

Pour les produits 26 liquides recueillis, il se produit une décantation et les produits concentrés en sels se trouvent en partie basse du bain et sont retirés du réacteur 10 unique de façon à conserver une hauteur donnée de bain et à éliminer les produits recombinés et non polluants.

Ces produits sont stockés en vue d'une autre utilisation ou de tout autre traitement de séparation.

Le flux des produits gazeux ayant subi le bombardement d'électrons et toujours sous forme gazeuse est évacué à l'atmosphère dans le cas exposé.

De façon à assurer une dépollution très satisfaisante, le flux gazeux subit un lavage par exemple par aspersion d'eau, les effluents de lavage étant redirigés vers le réacteur grâce à la pente du piquage.

Ces effluents liquides sont eux aussi traités dans le réacteur 10 unique jusqu'à la forme d'effluents liquides ultimes.

De façon perfectionnée, il est possible de prévoir aussi un lavage des parois du réacteur 10 unique de façon à limiter la corrosion des parois dudit réacteur. Simultanément, ce lavage limite fortement l'encrassement des parois par des dépôts.

Un tel procédé peut être réalisé à grande échelle pour traiter des volumes de plusieurs centaines de milliers de Normo m³/h.

La disposition est particulièrement avantageuse en termes d'industrie avec une forte amélioration du rendement énergétique et une forte augmentation de l'efficacité des traitements.

De plus, on note que les molécules entrantes du flux 14 gazeux sont traitées avec des électrons de même puissance, de façon homogène.

Cet agencement de réacteur 10 unique peut aussi convenir pour améliorer l'efficacité et le rendement de conversion dans le domaine de la chimie et des polymères, en particulier lorsqu'il est nécessaire d'activer des composés ou de générer des radicaux libres.

En particulier, il permet la synthèse d'un ou plusieurs produits issus du traitement par faisceau 18 d'électrons dans le réacteur d'un ou plusieurs composés à l'état gazeux avec ou sans l'ajout d'un ou plusieurs réactifs liquides, solides ou pulvérulents.

Avantageusement, l'injection des réactifs au sein du réacteur 10 unique se fait sous forme de spray afin de créer un « brouillard » favorisant la surface de contact entre le gaz et le liquide.

Le réacteur 10 unique de traitement d'effluents ou flux gazeux 14 en phase humide selon l'invention permet donc :
- la capture des composés contenus dans l'effluent ou flux gazeux 14 et leur gestion en phase liquide,
- l'injection de tous types de réactifs sous forme liquide ou pulvérulente (solution ammoniacale, chaux pulvérulente ou eau par exemple) dans le réacteur 10,
- la récupération de l'ensemble des sous produits de traitement aqueux et/ou solides dans une cuve située en position basse du réacteur 10,
- la réinjection de la solution récupérée dans la cuve en position basse du réacteur 10 vers la partie haute du réacteur 10. La recirculation de la solution de la cuve permet d'augmenter les concentrations en sous-produits de traitement de cette solution et d'optimiser/limiter ainsi les apports en réactifs,
- la formation importante d'entités actives (radicaux oxydants et réducteurs) issues de la réaction de radiolyse de l'eau provoquée par l'interaction des électrons accélérés avec les molécules d'eau. Ces entités actives sont à l'origine de l'efficacité de traitement des gaz par le procédé VGS car elles vont induire la dégradation des molécules organiques (dioxines, polychlorobiphényles, Composés Organiques Volatils...), l'oxydation des oxydes de soufre ou d'azote, la réduction des métaux contenus dans l'effluent gazeux. Cette optimisation de la production d'entités actives par sursaturation du taux d'humidité dans le réacteur 10 unique est particulièrement avantageuse et permet d'obtenir de meilleures performances de traitement que celles obtenues avec des procédés dits « secs » ou « semi-humides »,
- le lavage permanent des parois et des buses dans le réacteur 10 afin d'éviter leur encrassement et leur corrosion. Ce lavage permet aussi de récupérer les cendres, suies et autres particules fines contenues dans l'effluent ou flux gazeux 14.

Selon une autre caractéristique, le procédé selon l'invention est donc également caractérisé en ce que la production d'entités actives issues de la radiolyse de l'eau utilisée en tant qu'au moins un réactif liquide se fait avec une sursaturation du taux d'humidité dans le réacteur 10 unique.

## Revendications

1. Procédé de traitement d'au moins un flux (14) gazeux pollué dans un réacteur (10) unique ayant une forme tronconique ou cylindro-conique comprenant au moins des moyens (12) d'entrée du au moins un flux (14) gazeux pollué dans le réacteur (10) unique, disposés en haut du réacteur (10) unique, de moyens (40) d'alimentation en au moins un réactif, des moyens (16) d'émission d'un faisceau (18) d'électrons dans ledit réacteur, ce faisceau étant orienté sensiblement dans le sens de circulation du flux (14) gazeux pollué dans le réacteur (10) unique, des moyens (20) de sortie du réacteur (10) unique des produits (22) gazeux ayant subi le traitement par faisceau d'électrons, du au moins un effluent (14) gazeux pollué, disposés en bas du réacteur et des moyens (24) de récupération de sous-produits (26) liquides, disposés en partie inférieure dudit réacteur (10) unique, **caractérisé en ce qu'**il comprend au moins les étapes suivantes :
- introduire au moins un flux (14) gazeux pollué,
- introduire dans l'effluent gazeux pollué au moins un réactif liquide sous la forme d'ammoniaque et d'eau,
- soumettre le mélange de l'effluent gazeux pollué, d'ammoniaque et d'eau liquides à l'action d'un faisceau (18) d'électrons, pour induire la formation de radicaux qui décomposent les composés organiques volatils et les dioxines, et convertissent les oxydes de soufre et d'azote en un mélange de sels de sulfate et de nitrate d'ammonium,
- séparer d'une part le ou les produit(s) liquide(s) (26) issus du traitement du au moins un flux (14) gazeux pollué et d'autre part les produits gazeux traités,
- évacuer lesdits produits gazeux,
- recueillir et récupérer, grâce à ladite forme tronconique ou cylindre-conique et par gravité, les produits (26) liquides obtenus par le traitement par faisceaux d'électrons du au moins un flux (14) gazeux pollué.

2. Procédé de traitement d'au moins un flux gazeux selon la revendication 1, **caractérisé en ce que** le faisceau (18) d'électrons est émis suivant la direction D de circulation du flux gazeux dans le réacteur (10) unique.

3. Procédé de traitement d'au moins un flux gazeux selon la revendication 1 ou 2, **caractérisé en ce que** la production d'entités actives issues de la radiolyse de l'eau utilisée en tant qu'au moins un réactif liquide se fait avec une sursaturation du taux d'humidité dans le réacteur (10) unique.

4. Procédé de traitement d'au moins un flux gazeux selon l'une quelconque des revendications 1 à 3, **caractérisé en ce que** l'injection des réactifs au sein du réacteur (10) unique se fait sous forme de spray afin de créer un « brouillard » favorisant la surface de contact entre le gaz et le liquide.

5. Procédé de traitement d'au moins un flux gazeux selon l'une quelconque des revendications 1 à 4, **caractérisé en ce que** l'on dispose les moyens (12) d'entrée du au moins un flux (14) gazeux pollué et les moyens (20) de sortie des produits (22) gazeux, de façon à définir une direction D de circulation verticale à plus ou moins 30° dans le réacteur (10) unique.

6. Procédé de traitement d'au moins un flux gazeux selon l'une quelconque des revendications 1 à 5, **caractérisé en ce qu'**on lave avec des moyens de lavage (44), les produits (22) gazeux ayant subi le traitement par faisceau (18) d'électrons.

7. Procédé de traitement d'au moins un flux gazeux selon l'une quelconque des revendications 1 à 6, **caractérisé en ce qu'**on récupère les produits (26) liquides obtenus par le traitement par faisceaux (18) d'électrons du flux (14) gazeux pollué dans un bain liquide prévu dans le réacteur unique (10).

8. Procédé de traitement d'au moins un flux gazeux selon l'une quelconque des revendications 1 à 7, **caractérisé en ce qu'**on récupère les produits (26) liquides obtenus par le traitement par faisceaux (18) d'électrons du flux (14) gazeux pollué par des moyens (32) de récupération des produits (26) liquides et/ou **en ce qu'**on réinjecte lesdits produits liquides par des moyens (42-4, 42-5) de réinjection prévus dans le réacteur (10) unique.

9. Procédé de traitement d'au moins un flux gazeux selon l'une quelconque des revendications 1 à 8, **caractérisé en ce qu'**on pilote le réacteur (10) unique avec des moyens (52) de pilotage compris dans ce dernier.

## Patentansprüche

1. Verfahren zur Behandlung mindestens eines verunreinigten Gasstroms (14) in einem einzigen Reaktor (10) mit einer Kegelstumpf- oder zylindrisch-konischen Form, umfassend mindestens Mittel (12) für den Eintritt mindestens eines verunreinigten Gasstroms (14) in den einzigen Reaktor (10), die oben am einzigen Reaktor (10) angeordnet sind, Mittel (40) für die Zufuhr mindestens eines Reagenzmittels, Mittel (16) für die Emission eines Elektronenbündels (18) in den Reaktor, wobei dieses Bündel im Wesentlichen in der Zirkulationsrichtung des verunreinigten Gasstroms (14) in dem einzigen Reaktor (10) ausgerichtet ist, Mittel (20) für den Austritt gasförmiger Produkte (22) aus dem einzigen Reaktor (10), die der Behandlung, der mindestens einen verunreinigten Gasausströmung (14), durch das Elektronenbündel unterzogen wurden, die unten am Reaktor angeordnet sind, und Mittel (24) für die Rückgewinnung flüssiger Nebenprodukte (26), die teilweise unter dem einzigen Reaktor (10) angeordnet sind, **dadurch gekennzeichnet, dass** dieses mindestens die folgenden Schritte umfasst:
- Einleiten mindestens eines verunreinigten Gasstroms (14),
- Einbringen mindestens eines flüssigen Reagenzmittels in der Form von Ammoniak und Wasser in die verunreinigte Gasausströmung,
- Unterziehen des Gemischs von dem verunreinigten Gasstrom, flüssigem Ammoniak und Wasser der Wirkung eines Elektronenbündels (18), um die Bildung von Radikalen zu induzieren, welche die flüchtigen organischen Verbindungen und Dioxine zersetzen, und Umwandeln der Schwefel- und Stickoxide in eine Mischung von Sulfatsalzen und Ammoniumnitrat,
- Trennen einerseits des oder der flüssigen Produkte(s) (26), das/die von der Behandlung des mindestens einen verunreinigten Gasstroms (14) stammt/stammen, und andererseits der behandelten gasförmigen Produkte,
- Abführen der gasförmigen Produkte,
- Aufnehmen und Rückgewinnen, dank der Kegelstumpf- oder zylindrisch-konischen Form und durch die Schwerkraft, der flüssigen Produkte (26), die durch die Behandlung des mindestens einen verunreinigten Gasstroms (14) mit dem Elektronenbündel erhalten werden.

2. Verfahren zur Behandlung mindestens eines verunreinigten Gasstroms nach Anspruch 1,
**dadurch gekennzeichnet, dass**
das Elektronenbündel (18) in der Richtung D der Zirkulation des Gasstroms in dem einzigen Reaktor (10) emittiert wird.

3. Verfahren zur Behandlung mindestens eines verunreinigten Gasstroms nach Anspruch 1 oder 2,
**dadurch gekennzeichnet, dass**
die Erzeugung aktiver Einheiten, die aus der Radiolyse des Wassers stammen, das als mindestens ein flüssiges Reagenzmittel verwendet wird, mit einer Übersättigung des Feuchtigkeitsgehalts in dem einzigen Reaktor (10) erfolgt.

4. Verfahren zur Behandlung mindestens eines verunreinigten Gasstroms nach einem der Ansprüche 1 bis 3,
**dadurch gekennzeichnet, dass**
das Einbringen der Reagenzmittel in das Innere des einzigen Reaktors (10) in der Form von Sprühen erfolgt, um einen "Nebel" zu bilden, der die Kontaktfläche zwischen dem Gas und der Flüssigkeit begünstigt.

5. Verfahren zur Behandlung mindestens eines verunreinigten Gasstroms nach einem der Ansprüche 1 bis 4,
**dadurch gekennzeichnet, dass**
die Mittel (12) für den Eintritt des mindestens einen verunreinigten Gasstroms und die Mittel (20) für den Austritt der gasförmigen Produkte (22) derart angeordnet werden, dass eine Richtung D der vertikalen Zirkulation von plus oder minus 30° in dem einzigen Reaktor (10) definiert wird.

6. Verfahren zur Behandlung mindestens eines verunreinigten Gasstroms nach einem der Ansprüche 1 bis 5,
**dadurch gekennzeichnet, dass**
mit Waschmitteln (44) gewaschen werden, wobei die gasförmigen Produkte (22) der Behandlung durch das Elektronenbündel (18) unterworfen wurden.

7. Verfahren zur Behandlung mindestens eines verunreinigten Gasstroms nach einem der Ansprüche 1 bis 6,
**dadurch gekennzeichnet, dass**
die flüssigen Produkte (26), die durch die Behandlung des verunreinigten Gasstroms (14) mit dem Elektronenbündel (18) erhalten werden, in einem flüssigen Bad rückgewonnen werden, das in dem einzigen Reaktor (10) bereitgestellt ist.

8. Verfahren zur Behandlung mindestens eines verunreinigten Gasstroms nach einem der Ansprüche 1 bis 7,
**dadurch gekennzeichnet, dass**
die flüssigen Produkte (26), die durch die Behandlung des verunreinigten Gasstroms (14) mit dem Elektronenbündel (18) erhalten werden, durch Mittel (32) für die Rückgewinnung flüssiger Produkte (26) rückgewonnen werden, und/oder dass die flüssigen Produkte durch Wiedereinleitmittel (42-4, 42-5) wiedereingeleitet werden, die in dem einzigen Reaktor (10) bereitgestellt sind.

9. Verfahren zur Behandlung mindestens eines verunreinigten Gasstroms nach einem der Ansprüche 1 bis 8,
**dadurch gekennzeichnet, dass**
der einzige Reaktor (10) mit Steuermitteln (52) gesteuert wird, die dieser Letztere aufweist.

## Claims

1. A method for treating at least one polluted gaseous flow (14) in a single reactor (10) having a frustoconical or cylindroconical shape, including at least inlet means (12) for the at least one polluted gaseous flow (14) in the single reactor (10), disposed at the top of the single reactor (10), means (40) for supplying at least one reagent, means (16) for emitting an electron beam (18) in said reactor, said beam being oriented substantially in the direction of circulation of the polluted gaseous flow (14) in the single reactor (10), outlet means (20) from the single reactor (10) for the gaseous products, having undergone electron beam treatment, of the at least one polluted gaseous effluent (14), disposed at the bottom of the reactor, and means (24) for recovery of liquid by-products (26), disposed in the lower part of said single reactor (10), **characterized in that** it comprises at least the following steps:
- introducing at least one polluted gaseous flow (14),
- introducing into the polluted gaseous effluent at least one liquid reagent in the form of ammonia and water,
- subjecting the mixture of the polluted gaseous effluent, of liquid ammonia and of liquid water to the action of an electron beam (18), to induce the formation of radicals that break down the volatile organic compounds and the dioxins, and convert the sulphur oxides and nitrogen oxides into a mixture of sulphate salts and ammonium nitrate,
- separating, on the one hand, the liquid product(s) (26) originating from the treatment of the at least one polluted gaseous flow (14) and, on the other hand, the treated gaseous products,
- evacuating said gaseous products,
- collecting and recovering, owing to said frustoconical or cylindroconical shape and by gravity, the liquid products (26) obtained by the electron beam treatment of the at least one polluted gaseous flow (14).

2. A method for treating at least one gaseous flow according to Claim 1, **characterized in that** the electron beam (18) is emitted along the direction D of circulation of the gaseous stream in the single reactor (10).

3. A method for treating at least one gaseous flow according to Claim 1 or 2, **characterized in that** the production of active entities originating from the radiolysis of the used water as at least one liquid reagent is carried out with a supersaturation of the moisture level in the single reactor (10).

4. A method for treating at least one gaseous flow according to any one of Claims 1 to 3, **characterized in that** the injection of the reagents within the single reactor (10) is carried out in spray form so as to create a "mist" enhancing the contact surface between the gas and the liquid.

5. The method for treating at least one gaseous flow according to any one of Claims 1 to 4, **characterized in that** the inlet means (12) for the at least one polluted gaseous flow (14) and the outlet means (20) for the gaseous products (22) are disposed so as to define a vertical circulation direction D at more or less 30° in the single reactor (10).

6. A method for treating at least one gaseous flow according to any one of Claims 1 to 5, **characterized in that** the gaseous products (22) that have undergone the electron beam treatment (18) are washed with washing means (44).

7. A method for treating at least one gaseous flow according to any one of Claims 1 to 6, **characterized in that** the liquid products (26) obtained by the electron beam treatment (18) of the polluted gaseous flow (14) are recovered in a liquid bath provided in the single reactor (10).

8. A method for treating at least one gaseous flow according to any one of Claims 1 to 7, **characterized in that** the liquid products (26) obtained by the electron beam treatment (18) of the polluted gaseous flow (14) are recovered by recovery means (32) of the liquid products (26) and/or **in that** said liquid products are reinjected by reinjection means (42-4, 42-5) provided in the single reactor (10).

9. A method for treating at least one gaseous flow according to any one of Claims 1 to 8, **characterized in that** the single reactor (10) is controlled by control means (52) comprised in the latter.
